Europäisches Patentamt

European Patent Office

Office européen des brevets

(11) Veröffentlichungsnummer : **0 170 112**
**B1**

(12) **EUROPÄISCHE PATENTSCHRIFT**

(45) Veröffentlichungstag der Patentschrift :
17.05.89

(51) Int. Cl.⁴ : **B 26 B 19/10**

(21) Anmeldenummer : 85108431.9

(22) Anmeldetag : 08.07.85

(54) Langhaarschneideinrichtung für Trockenrasierapparate.

(30) Priorität : 02.08.84 DE 3428487

(43) Veröffentlichungstag der Anmeldung :
05.02.86 Patentblatt 86/06

(45) Bekanntmachung des Hinweises auf die Patenterteilung : 17.05.89 Patentblatt 89/20

(84) Benannte Vertragsstaaten :
AT BE CH DE FR GB IT LI LU NL SE

(56) Entgegenhaltungen :
EP—A— 0 116 320
CH—A— 480 922
DE—B— 1 111 062
FR—A— 2 268 606
FR—A— 2 314 027
GB—A— 2 139 134

(73) Patentinhaber : Braun Aktiengesellschaft
Rüsselsheimer Strasse 22
D-6000 Frankfurt/Main (DE)

(72) Erfinder : Hilfinger, Peter
Gartenfeldstrasse 43
D-6380 Bad Homburg (DE)

(74) Vertreter : Einsele, Rolf
Braun Aktiengesellschaft Postfach 1120 Frankfurter
Strasse 145
D-6242 Kronberg Taunus (DE)

**Beschreibung**

Die Erfindung betrifft eine Langhaarschneideinrichtung für Trockenrasierapparate mit einem fest angeordneten Scherkamm und einer längs diesem geradlinig hin- und herbewegbaren, mittels Andruckfedern gegen ihn gedrückten Scherklinge, letztere bestehend aus einem plan ausgebildeten Klingenblatt und einem aus einem plastischen Material bestehenden Tragkörper, der mit dem Klingenblatt eine einstückige, biegesteife Baueinheit bildet.

Bei einer Langhaarschneideinrichtung dieser Art (DE-A1-33 03 989) wird der Einsatz von einem plan ausgebildeten Klingenblatt, das auf ätztechnischem Wege hergestellt ist, ermöglicht durch eine formschlüssige Befestigung des Klingenblatts an einem apparateseitig hin- und herbewegten Tragkörper, der mit dem betreffenden Klingenblatt eine biegesteife Baueinheit bildet. Die formschlüssige Befestigung des Klingenblattes erfolgt hierbei mittels mehrerer an dem Tragkörper angeformter Noppen, die entsprechende Durchbrüche des Klingenblattes durchdringen und letzteres am Tragkörper unverrückbar festlegen. Diese Art der Festlegung des Klingenblattes am Tragkörper ist fertigungstechnisch zu aufwendig, denn die hier erforderliche, spielfreie Befestigung des Klingenblattes auf dem Tragkörper läßt keine Toleranzen bezüglich der Durchmesser der Noppen sowie der Aufnahmedurchbrüche und des Abstandes der Noppen zu den Aufnahmedurchbrüchen zu. Darüber hinaus hat sich ergeben, daß bereits ein geringes Toleranzspiel zwischen den Noppen und den Aufnahmedurchbrüchen nach längerem Gebrauch der Langhaarschneideinrichtung zu verstärkten Verschleißerscheinungen an den Noppen führt, was sich nachteilig auf das Schneidergebnis der Langhaarschneideinrichtung auswirkt.

Aus der CH-A-480 922 ist eine schwenkbar gelagerte, mittels Federn in Betriebsstellung bringbare Langhaarschneideinrichtung bekannt, mit einem Scherkamm, einem abgewinkelten Klingenblatt und einem Tragkörper, der das dem Schneidbereich abgewandte Ende des Klingenblattes U-förmig umgibt. Das Klingenblatt liegt mit leichtem Druck, der durch das dünne und deshalb federnde Klingenblatt erzeugt wird, am Scherkamm an.

Aufgabe der Erfindung ist es, eine mit einem plan ausgebildeten Klingenblatt bestückte Scherklinge für die Langhaarschneideinrichtung eines Trockenrasierapparates zu schaffen, bei der eine sichere und spielfreie Mitnahme des Klingenblattes durch den Tragkörper der Scherklinge gewährleistet ist.

Diese Aufgabe wird nach der Erfindung dadurch gelöst, daß das Klingenblatt mit einer länglichen, eine Einschnürung aufweisende Ausnehmung versehen ist, am Tragkörper an einer Auflagefläche des Klingenblattes eine Abstützleiste in Bewegungsrichtung des Tragkörpers verlaufend vorgesehen ist und durch unmittelbares Anspritzen des Tragkörpers an das Klingenblatt die Ausnehmung vom Material des Tragkörpers ausgefüllt sowie die Abstützleiste gebildet wird.

Als Folge des unmittelbaren Anbindens des Tragkörpers an das Klingenblatt bei dessen Herstellung entfallen sämtliche Toleranzen und Toleranzketten bezüglich der der Befestigung und Halterung des Klingenblattes am Tragkörper dienenden Bauteile. Das Klingenblatt bildet nach der Herstellung des Tragkörpers mit diesem zusammen eine aus einem Stück bestehende Scherklinge. Die am Tragkörper vorgesehene, in Bewegungsrichtung des Tragkörpers verlaufende Abstützleiste sowie die im Klingenblatt befindliche, mit einer Einschnürung versehenen Ausnehmung, in die zwecks Bildung eines Noppens am Tragkörper das Material des Tragkörpers bei dessen Herstellung einfließt, gewährleisten eine sichere Befestigung des Klingenblatts am Tragkörper und fangen sämtliche auf das Klingenblatt bei Benutzung einwirkenden Kräfte auf.

Die besondere Formgestaltung der Ausnehmung im Klingenblatt bewirkt über die vorgesehene Einschnürung, daß das Klingenblatt und der Tragkörper im Spritzverfahren zu einem Bauteil vereinigt werden können, denn der beim Erkalten des angespritzten Tragkörpers stattfindende Schrumpfungsprozeß wirkt sich zumindest im Bereich der Einschnürung nicht aus, so daß eine spielfreie und feste Verbindung des Klingenblattes mit dem Tragkörper erzielt wird.

Nach der Erfindung verläuft die Längserstreckung der Ausnehmung im Klingenblatt parallel zur Schneidebene des Klingenblattes, wobei die Einschnürung im Mittenbereich der Längserstreckung vorgesehen ist.

Eine optimale Anordnung und Befestigung des Klingenblattes auf dem Tragkörper wird dadurch erreicht, daß die die Längsachse der Ausnehmung schneidende Querachse zusammenfällt mit der mittigen Querachse des Klingenblattes.

Die engste Stelle der Einschnürung der Ausnehmung liegt nach der Erfindung vorzugsweise auf der durch die Ausnehmung gehenden Querachse.

Nach einer bevorzugten Ausführungsform der Erfindung ist, ausgehend von der die Ausnehmung mittig teilenden Querachse, die Formgebung der Ausnehmung auf beiden Seiten spiegelbildlich ausgeführt.

Die dem Anspritzen dienende Ausnehmung des Klingenblattes kann bei gleicher Funktionssicherheit unterschiedlich ausgebildet sein. Nach einer bevorzugten Ausführungsform der Erfindung ist die Ausnehmung gebildet aus zwei beiderseits der Querachse vorgesehenen, kreisförmigen Ausnehmungen, die durch einen eingeschnürten Ausnehmungsbereich miteinander verbunden sind.

Den gleichen Erfolg erzielt man jedoch, wenn die Ausnehmung aus zwei beiderseits der Querachse vorgesehenen, trapezförmigen Ausnehmungen besteht, deren zueinander ausgerichteten Trapezspitzen durch geringe Überlagerung ineinander übergehen zwecks Bildung der Einschnürung.

Der die Ausnehmung im Klingenblatt ausfüllende Noppen ist nach der Erfindung Bestandteil des Tragkörpers und wird gebildet durch unmittelbares Anspritzen des Tragkörpers an das Klingenblatt.

Die so konzipierte Anbindung des Klingenblattes am Tragkörper der Scherklinge der erfindungsgemäßen Langhaarschneideinrichtung ergibt eine kompakte, in sich geschlossene, biegesteife Baueinheit, deren Montage in die Langhaarschneideinrichtung problemlos und schnell vonstatten geht.

Weitere Vorteile und Einzelheiten der Erfindung ergeben sich aus der nachfolgenden Beschreibung und der Zeichnung, in denen bevorzugte Ausführungsbeispiele dargestellt sind, und zwar zeigen:

Fig. 1 eine Draufsicht auf das an den Tragkörper der Scherklinge der erfindungsgemäßen Langhaarschneideinrichtung angespritzte Klingenblatt,

Fig. 2 einen Querschnitt durch die Scherklinge nach der Schnittlinie A-A der Figur 1,

Fig. 3 eine Seitenansicht der Langhaarschneideinrichtung, bestehend aus Scherkamm, Scherklinge, Andruckfedern und Gleitschieber,

Fig. 4 eine Variante, der dem Anspritzen des Klingenblattes an den Tragkörper dienenden Ausnehmung und

Fig. 5 einen Scherkopfrahmen mit Scherkamm, Scherklinge, Andruckfedern und deren Gehäuseabstützung.

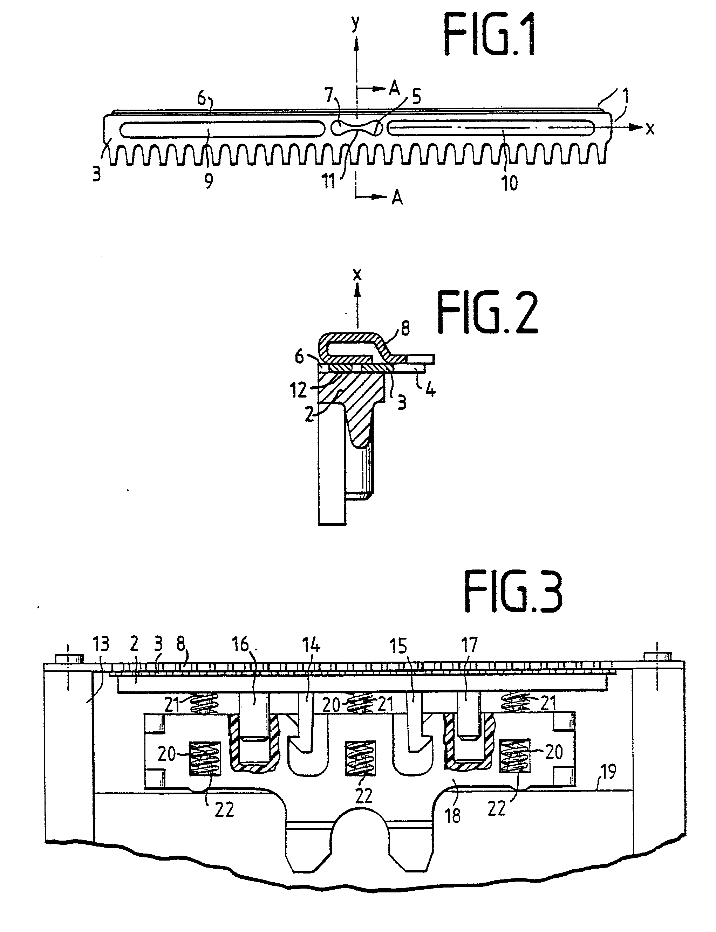

Wie die Figuren 1-3 erkennen lassen, besteht die Scherklinge 1 der erfindungsgemäßen Langhaarschneideinrichtung aus einem Tragkörper 2 und einem daran angespritzten Klingenblatt 3. Der Tragkörper 2 besitzt hier rechteckigen Querschnitt, wobei auf seiner breiten Oberfläche das Klingenblatt 3 plan aufliegt, und zwar derart, daß sein gezahnter Scherbereich 4 außerhalb des Umrisses des Körpers 2 zu liegen kommt, wobei der Tragkörper 2 jedoch soweit als möglich ohne Behinderung der Rasur an diesen Scherbereich 4 heranreicht.

Das hier verwendete Klingenblatt 3 ist auf galvanischem oder ätztechnischem Wege hergestellt und zeichnet sich durch seine besonders geringe Materialstärke aus, was infolge des daraus resultierenden äußerst tiefen Haarabschnitts zu einer praktisch optimalen Rasur führt.

Dieses nach alledem äußerst dünne Klingenblatt 3 wird nun gemäß der Erfindung durch Anspritzen des Tragkörpers 2 bei dessen Herstellung mit diesem zu einer Baueinheit fest verbunden. Vor dem Spritzen des Tragkörpers 2 wird das Klingenblatt 3 in das Spritzwerkzeug eingelegt, und zwar so, daß es nach dem Spritzen gemäß Figur 2 oberhalb des Tragkörpers zu liegen kommt. Während des Spritzprozesses wird eine Ausnehmung oder Durchbruch 5 besonderer Formgebung im Klingenblatt 3 von dem in das Werkzeug eingespritzte, den Tragkörper 2 bildenden Material ausgefüllt und damit das Klingenblatt 3 am Tragkörper 2 festgelegt. Des weiteren wird durch das eingespritzte Material innerhalb des den Tragkörper formenden Werkzeuges eine Abstützleiste 6 gebildet, die dem am Tragkörper 2 angespritzten Klingenblatt 3 als Anlage dient und damit — gemeinsam mit dem durch das Anspritzen gebildeten, die Ausnehmungen 5 füllende Material 7 — für eine exakte geometrische Lage des Klingenblattes zum Tragkörper 2 wirkt.

Zwecks Reibungsverminderung zwischen dem Klingenblatt 3 und dem feststehenden Scherkamm 8 — der unterschiedlich geformt sein kann, z. B. zurückgefaltet, wie aus Fig. 2 oder plan, wie aus Fig. 3 ersichtlich — weist das Klingenblatt auf der dem Scherkamm zugewandten Seite Vertiefungen 9 und 10 auf, die jeweils kurz vor der Ausnehmung 5 enden. Die die Vertiefungen 9 und 10 sowie die Ausnehmung 5 umgebende plane Oberfläche des Klingenblattes 3 bildet eine Gleitfläche für den Scherkamm 8.

Die Ausnehmung 5 im Klingenblatt 3, weist eine parallel zum Scherbereich 4 bzw. zur Abstützleiste 6 ausgerichtete längliche Form auf, deren Längsachse x vorzugsweise zusammenfällt mit der die Auflagefläche 12 am Tragkörper 2 teilenden parallel zum Scherbereich verlaufenden Mittenachse.

Die die Ausnehmung 5 in ihrer Mitte schneidende Querachse y teilt zugleich das Klingenblatt 3 in zwei kongruente Hälften und liegt auf der die Auflagefläche 12 mittig teilenden Querachse.

Die Ausnehmung 5 im Klingenblatt 3, weist um ein sicheres Anbinden des Klingenblattes am Tragkörper 3 zu erzielen, eine spezielle Formgebung auf, deren charakteristisches Merkmal darin besteht, daß die beiden Längsseiten der Ausnehmung 5 ausgehend von den äußeren weitesten Abständen zur Querachse y hin in Richtung der Längsachse x zueinander verlaufen, um eine Einschnürung 11 zu bilden. Die engste Stelle der Einschnürung 11 der Ausnehmung 5 liegt vorzugsweise auf der Querachse y. Ausgehend von der die Ausnehmung 5 teilenden Querachse y ist die Formgebung der Ausnehmung 5 auf beiden Seiten der Querachse vorzugsweise spiegelbildlich ausgeführt.

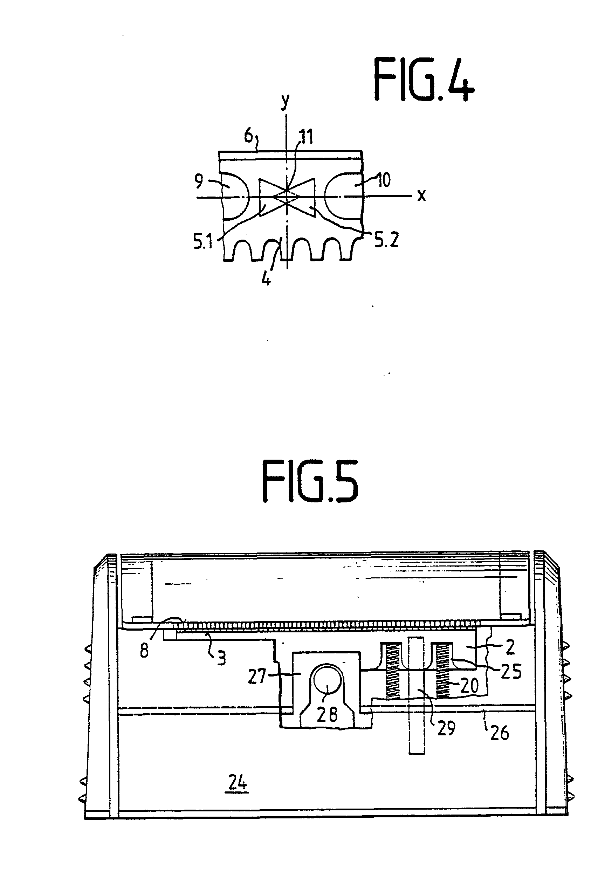

Zwei besonders vorteilhafte Gestaltungsformen der Ausnehmung 5 mit Einschnürung 11 sind in den Figuren 1 und 4 dargestellt.

Die Ausnehmung 5 nach Fig. 1 besteht aus zwei in einem Abstand von der Querachse y vorgesehenen kreisförmigen Endbereichen, die durch einen sich zur Querachse y verjüngenden, die Einschnürung 11 bildenden Ausnehmungsbereich miteinander verbunden sind.

Die in Fig. 4 dargestellte Ausnehmung 5, die anstelle der Ausnehmung nach Fig. 1 vorgesehen werden kann, besteht aus zwei beiderseits der Querachse y vorgesehenen trapezförmigen Ausnehmungen 5.1 und 5.2, deren zueinander ausgerichteten Trapezspitzen sich geringfügig überlagern und auf diese Weise die Einschnürung 11 bilden, d. h. der Abstand der parallel zur Querachse y verlaufenden Seitenwände der trapezförmigen Ausnehmungen zur Querachse y ist so gewählt, daß sich die gewünschte Einschnürungsbreite einstellt.

Der besondere Effekt, der über die Einschnürung 11 in der Ausnehmung 5 erzielt wird, besteht darin, daß die Schrumpfung des erkaltenden in die Ausnehmung eingespritzten Materials 7 im Bereich der Einschnürung aufgrund der zunehmend verjüngenden Spaltbreite vernachlässigbar gering ist und nicht ausreicht, um einen Abriß des Materials von den die Einschnürung bildenden Seitenwänden der Ausnehmung 5 zu bewirken. Über die vorstehend im einzelnen erläuterte Anbringung des Klingenblattes 3 am Tragkörper 2 wird einerseits ein fester spielfreier Verbund beider Bauelemente erreicht und andererseits sichergestellt, daß dieses Verbund langfristig allen Beanspruchungen, die bei Betrieb der hin- und herschwingenden Scherklinge auftreten, standhält. Die Schwingkraft wirkt in der jeweiligen Bewegungsrichtung des Tragkörpers in Richtung der engsten Stelle der Einschnürung 11 und wird über die sich jeweils zur Querachse verjüngenden Seitenwände der Ausnehmung 5 unmittelbar auf das Klingenblatt 3 übergeleitet.

Der Tragkörper 2 der Langhaarschneideinrichtung nach der Erfindung kann auf seiner dem Klingenblatt 3 abgewandten Seite unterschiedlich ausgebildet sein. Zwei Ausführungsvarianten sind in den Fig. 3 und 5 dargestellt.

Nach Fig. 3 ist an einem Schiebeschalter 13 des Rasierapparates ein Scherkamm 8 fest angeordnet. Die Scherklinge nach der Erfindung liegt mit dem auf dem Tragkörper 2 befestigten Klingenblatt 3 gleitend an dem Scherkamm 8 an. An dem Tragkörper 2 sind an der dem Klingenblatt 3 abgewandten Seite Rastmittel 14 und 15 sowie Bolzen 16 und 17 angeformt, die in entsprechende Ausnehmungen in einem Gleitschieber 18 eingreifen, der über den Schiebeschalter 13 mit einem nicht dargestellten Antriebsmotor des Rasierers gekoppelt bzw. entkoppelt wird. Der Gleitschieber 18 bewegt sich auf einer am Schiebeschalter 13 angeformten Gleitbahn 19. Die zwischen dem Gleitschieber 18 und dem Tragkörper 2 vorgesehenen Andruckfedern 20, die mittels am Tragkörper 2 und am Gleitschieber angeformten Führungsnoppen 21 und 22 definiert positioniert sind, drücken mittels eines vorgegebenen Druckes einerseits die Scherklinge an den Scherkamm 8 und andererseits den Gleitschieber 18 an die Gleitbahn 19.

Fig. 5 zeigt den Scherkopfrahmen 23 eines Trockenrasierapparates mit einem Teilschnitt in der vorderen Gehäusewand 24. In dem Tragkörper 2 der beweglichen Scherklinge nach der Erfindung sind Ausnehmungen 25 vorgesehen, in die Andruckfedern 20 eingreifen, die sich auf einer gestrichelt dargestellten an der Gehäusewand 24 angeformten Abstützleiste 26 abstützen. Die Ausnehmungen 25 definieren die Länge und den Druckpunkt der Andruckfedern 20 im Tragkörper 2 und drücken diesen zusammen mit dem angespritzten Klingenblatt 3 an den am Scherkopfrahmen 23 befestigten Scherkamm 8. Die am Tragkörper 2 angeformte Gabel 27 überträgt die oszillierende Bewegung des im Eingriff befindlichen Antriebsbolzens 28 auf den Tragkörper 2 und somit auf das Klingenblatt 3.

Die Führungsleiste 29 hält die Scherklinge gleitbar an der Innenwandung der Gehäusewand 24.

Der Teilschnitt nach Fig. 5 zeigt, ausgehend von der Mittellinie, lediglich eine Seite des Tragkörpers 2 mit dem Klingenblatt 3 sowie zwei Andruckfedern 20 und eine Führungsleiste 29. Es versteht sich von selbst, daß die linke Seite spiegelbildlich ausgebildet ist.

Bezugszeichenliste (Begriffsliste)

1 Scherklinge
2 Tragkörper von 1 für 3
3 Klingenblatt von 1, an 2 angespritzt
4 Scherbereich von 3
5 Ausnehmungen in 3
5.1 trapezförmige Ausnehmung
5.2 trapezförmige Ausnehmung
6 Leiste von 2, als Anlage für 3
7 Füllmaterial (von 2 in 5)
8 Scherkamm (apparatefest)
9 Vertiefungen
10 Vertiefungen
11 Einschnürung
12 Auflagefläche
13 Schiebeschalter
14 Rastmittel
15 Rastmittel
16 Bolzen
17 Bolzen
18 Gleitschieber
19 Gleitbahn
20 Andruckfedern
21 Führungsnoppen
22 Führungsnoppen
23 Scherkopfrahmen
24 Gehäusewand
25 Ausnehmungen
26 Abstützleiste
27 Gabel
28 Antriebsbolzen
29 Führungsleiste

**Patentansprüche**

1. Langhaarschneideinrichtung für Trockenrasierapparate mit einem fest angeordneten Scherkamm (8) und einer längs diesem geradlinig hin- und herbewegbaren, mittels Andruckfedern (20) gegen ihn gedrückten Scherklinge (1), letztere bestehend aus einem plan ausgebildeten Klingenblatt (3) und einem aus plastischem Material bestehenden Tragkörper (2), der mit dem Klingenblatt (3) eine einstückige, biegesteife Baueinheit bildet, dadurch gekennzeichnet, daß

a) das Klingenblatt (3) mit einer länglichen, eine Einschnürung (11) aufweisende Ausnehmung (5) versehen ist,

b) am Tragkörper (2) an einer Auflagefläche (12) des Klingenblattes (3) eine Abstützleiste (6) in Bewegungsrichtung des Tragkörpers (2) verlaufend vorgesehen ist und

c) durch unmittelbares Anspritzen des Tragkörpers (2) an das Klingenblatt (3) die Ausnehmung (5) vom Material des Tragkörpers (2) ausgefüllt sowie die Abstützleiste (6) gebildet wird.

2. Langhaarschneideinrichtung nach Anspruch 1, dadurch gekennzeichnet, daß die Längserstreckung der Ausnehmung (5) im Klingenblatt (3) parallel zum Scherbereich (4) des Klingenblattes (3) verläuft und daß die Einschnürung im Mittenbereich der Längserstreckung vorgesehen ist.

3. Langhaarschneideinrichtung nach einem der vorhergehenden Ansprüche, dadurch gekennzeichnet, daß die die Längsachse (x) der Ausnehmung (5) schneidende Querachse (y) zusammenfällt mit der mittigen Querachse des Klingenblattes (3).

4. Langhaarschneideinrichtung nach einem der vorhergehenden Ansprüche, dadurch gekennzeichnet, daß die engste Stelle der Einschnürung (11) der Ausnehmung (5) auf der Querachse (y) liegt.

5. Langhaarschneideinrichtung nach einem der vorhergehenden Ansprüche, dadurch gekennzeichnet, daß ausgehend von der, die Ausnehmung (5) teilenden Querachse (y), die Formgebung der Ausnehmung (5) auf beiden Seiten spiegelbildlich ausgeführt ist.

6. Langhaarschneideinrichtung nach einem der vorhergehenden Ansprüche, dadurch gekennzeichnet, daß die Ausnehmung (5) gebildet ist, aus zwei beiderseits der Querachse (y) vorgesehenen kreisförmigen Ausnehmungen, die durch einen eingeschnürten Ausnehmungsbereich miteinander verbunden sind.

7. Langhaarschneideinrichtung nach einem der vorhergehenden Ansprüche, dadurch gekennzeichnet, daß die Ausnehmung (5), aus zwei beiderseits der Querachse (y) vorgesehenen trapezförmigen Ausnehmungen (5.1, 5.2) besteht, deren zueinander ausgerichteten Trapezspitzen durch geringe Überlagerung ineinander übergehen, zwecks Bildung der Einschnürung (11).

## Claims

1. A long-hair trimmer for dry shavers, with a fixed cutting comb (8) and a cutter (1) which is reciprocable along said cutting comb in a straight line and is urged into engagement therewith by means of compression springs (20), said cutter being comprised of a cutting blade (3) of plane configuration and a support member (2) made of a plastic material which combines with the cutting blade (3) to form an integral, flexurally rigid unit, characterized in that

a) the cutting blade (3) is provided with an oblong aperture (5) having a constricted portion (11) ;

b) that the support member (2) includes on a seating surface (12) of the cutting blade (3) an abutment strip (6) extending in the direction of movement of the support member (2) ; and

c) that by directly injection-molding the support member (2) onto the cutting blade (3), the aperture (5) is filled by the material of the support member (2) and the abutment strip (6) is formed.

2. A long-hair trimmer as claimed in claim 1, characterized in that the longitudinal extent of the aperture (5) in the cutting blade (3) is parallel to the cutting area (4) of the cutting blade (3), and that the constricted portion is provided in the middle area of the longitudinal extent.

3. A long-hair trimmer as claimed in any one of the preceding claims, characterized in that the transverse axis (y) intersecting the longitudinal axis (x) of the aperture (5) coincides with the central transverse axis of the cutting blade (3).

4. A long-hair trimmer as claimed in any one of the preceding claims, characterized in that the narrowest portion of the constricted portion (11) of the aperture (5) lies on the transverse axis (y).

5. A long-hair trimmer as claimed in any one of the preceding claims, characterized in that the aperture (5) is formed of a mirror image on either side, starting at the transverse axis (y) which divides the aperture (5).

6. A long-hair trimmer as claimed in any one of the preceding claims, characterized in that the aperture (5) is formed of two circular cutouts provided on either side of the transverse axis (y), said circular cutouts being connected with one another by a constricted portion in the aperture.

7. A long-hair trimmer as claimed in any one of the preceding claims, characterized in that the aperture (5) is formed of two trapezoidal cutouts (5.1, 5.2) provided on either side of the transverse axis (y), the opposite apices of said trapezoids merging in a slight overlap to form the constricted portion (11).

## Revendications

1. Tondeuse pour appareil de rasage à sec comprenant un peigne (8) agencé de manière fixe et une lame tondeuse (1) déplaçable en va-et-vient de manière linéaire le long de ce peigne et pressée contre lui au moyen de ressorts de pression (20), cette lame tondeuse étant constituée d'une lamelle (3) réalisée sous une forme plane et d'un corps de support (2) en matière plastique qui forme avec la lamelle (3) une unité de construction d'une pièce, résistant à la flexion, caractérisée en ce que

a) la lamelle (3) est pourvue d'un évidement (5) oblong, présentant un rétrécissement (11),

b) une nervure d'appui (6) est, sur le corps de support (2), prévue de manière à s'étendre suivant la direction de déplacement du corps de support (2), sur une surface d'appui (12) de la lamelle (3), et

c) l'évidement (5) est rempli par la matière du corps de support (2) et la nervure d'appui (6) en est formée, par injection directe du corps de support (2) sur la lamelle (3).

2. Tondeuse suivant la revendication 1, caractérisée en ce que l'extension longitudinale de l'évidement (5) de la lamelle (3) s'étend parallèlement à la zone de cisaillement (4) de la lamelle (3) et en ce que le rétrécissement est prévu dans la zone centrale de l'extension longitudinale.

3. Tondeuse suivant l'une des revendications précédentes, caractérisée en ce que l'axe transversal (y), qui croise l'axe longitudinal (x) de l'évidement (5), coïncide avec l'axe transversal central de la lamelle (3).

4. Tondeuse suivant l'une des revendications précédentes, caractérisée en ce que l'endroit le plus étroit du rétrécissement (11) de l'évidement (5) se trouve sur l'axe transversal (y).

5. Tondeuse suivant l'une des revendications précédentes, caractérisée en ce que, en partant de l'axe transversal (y) qui divise l'évidement (5), la conformation de l'évidement (5) est effectuée des deux côtés sous une forme réfléchie.

6. Tondeuse suivant l'une des revendications précédentes, caractérisée en ce que l'évidement (5) est formé de deux évidements circulaires qui sont prévus de part et d'autre de l'axe transversal (y) et qui sont mutuellement reliés par une zone d'évidement rétrécie.

7. Tondeuse suivant l'une des revendications précédentes, caractérisée en ce que l'évidement (5) est constitué de deux évidements (5.1, 5.2) trapézoïdaux qui sont prévus de part et d'autre de l'axe transversal (y) et dont les sommets orientés l'un vers l'autre passent l'un dans l'autre par une faible superposition, en vue de former le rétrécissement (11).

FIG.1

FIG.2

FIG.3

# FIG.4

# FIG.5